# EUROPEAN PATENT APPLICATION

(11) **EP 2 706 384 A1**
(43) Date of publication of application: **12.03.2014**
(21) Application number: 12799913.4
(22) Date of filing: 19.04.2012
(51) Int. Cl.: G01V 8/10, B60R 1/00, B60R 21/205

(54) **OCCUPANT SENSING DEVICE**

(30) Priority: 17.06.2011 JP 2011134703
(71) Applicant: Honda Motor Co., Ltd., Minato-ku Tokyo 107-8556 (JP)
(72) Inventor: KOIKE Toshihiro, Wako-shi Saitama 351-0193 (JP)
(74) Representative: Prechtel, Jörg
(86) International application number: PCT/JP2012/060584
(87) International publication number: WO 2012/172865

(57) **Abstract**

Provided is an occupant sensing device which accurately detects the state of an occupant regardless of the influence of extraneous noise, outside light, and the like and the influence of a defect in detected data when lighting of auxiliary light is delayed, and the like. When a specific part detection possibility/impossibility determination unit (24) determines that the detection of the position of a specific part such as a head (56) in the latest image is impossible, on the basis of past data stored as data corresponding to images outputted from a camera (14) earlier than the latest image in a storage unit (22), the position of the head (56) is predicted and detected.

## Description

### Technical Field

The present invention relates to an occupant detecting device (occupant sensing device) for capturing the image of the behavior of an occupant seated on a seat in a vehicle with an image capturing unit such as a video camera or the like while also detecting the position of a particular region of the occupant.

### Background Art

Heretofore, as disclosed in Japanese Laid-Open Patent Publication No. 2004-144512 (JP2004-144512A), there has been proposed an occupant detecting system for judging whether there is an occupant in a vehicle by capturing an image of the occupant with a camera disposed in the cabin of the vehicle and detecting the head of the imaged occupant.

According to paragraph [0067] of JP2004-144512A, the disclosed occupant detecting system is capable of detecting the state of the occupant based on an image in an infrared range in which visible light is partially cut off, the image being stable in brightness at all times without being affected by changes in ambient brightness.

Japanese Laid-Open Patent Publication No. 2005-284975 (JP2005-284975A) discloses a safety drive apparatus for detecting a line of sight of the driver of a vehicle with a camera, and judging the driver to be inattentive and reckless if the line of sight is directed toward an object such as a navigation device or the like continuously for a period of time that exceeds a threshold time.

### Summary of Invention:

Sunlight contains more than a small amount of infrared radiation, and it is impossible to completely eliminate the effects of sunlight, which could have a significant influence on the captured images. Therefore, the captured images may possibly be saturated by sunlight. When the vehicle enters a tunnel, for example, the timing at which an auxiliary light is turned on may be delayed. Consequently, the occupant detecting system disclosed in JP2004-144512A suffers from a problem in that it is incapable of producing an image that enables appropriate detection of the head of an occupant. The safety drive apparatus disclosed in JP2005-284975A also suffers from the above problem, which occurs when the vehicle enters a tunnel, for example.

The present invention has been made in view of the aforementioned problems. It is an object of the present invention to provide an occupant detecting device, which is capable of reliably detecting the behavior of an occupant of a vehicle without being affected by extraneous noise and ambient light, or by a loss of detection data due to a delay in turning on an auxiliary light.

An occupant detecting device according to the present invention includes an image capturing unit disposed in a cabin of a vehicle for capturing images of a given area including a seat in the cabin continuously or intermittently at predetermined time intervals and successively outputting the captured images, a position detecting unit for detecting the position of a particular body region of an occupant seated on the seat in the images output from the image capturing unit, an occupant state detecting unit for detecting a state of the occupant based on the position of the particular body region, which is detected by the position detecting unit, a memory unit for successively storing data depending on the images that are successively output during a predetermined period from the image capturing unit, and a detectability determining unit for judging whether or not the position detecting unit is capable of detecting the position of the particular body region, wherein if the detectability determining unit judges that the position detecting unit is capable of detecting the position of the particular body region in a latest image that serves as a presently output image of the images successively output from the image capturing unit, then the position detecting unit detects the position of the particular body region based on the latest image, and if the detectability determining unit judges that the position detecting unit is incapable of detecting the position of the particular body region in the latest image, the position detecting unit detects the position of the particular body region based on past data that are stored in the memory unit as data depending on images output from the image capturing unit before the latest image.

According to the present invention, in the event that it is impossible to detect the position of the particular body region, e.g., the position of the head of the occupant or the like, in the latest image, the position of the particular body region is detected based on past images. Therefore, the state of the occupant can reliably be detected and system reliability can be increased without being affected by loss of detection data due to a delay in turning on an auxiliary light.

The past data may comprise first past data that serves as data depending on one of the images, which is output from the image capturing unit in the predetermined time interval before the latest image, among the data stored in the memory unit. Since the images are captured intermittently, the memory unit may have a reduced storage capacity, and even if it is impossible to detect the position of the particular body region in the latest image, the position of the particular body region can be detected using an image chronologically closest to the latest image, i.e., a penultimate image, so that the accuracy with which the position of the particular body region is detected can be prevented from being lowered.

The past data may comprise the first past data, and second past data that serve as data depending on one of the images, which is output from the image capturing unit in the predetermined time interval before the first past data, and the position detecting unit may detect the position of the particular body region based on a change in position between the particular body region detected in the first past data and the particular body region detected in the second past data. Therefore, even if it is impossible to detect the position of the particular body region in the latest image, the position of the particular body region can be detected using an image chronologically closest, by one, with respect to the latest image, i.e., an antepenultimate image, as well as the image chronologically closest to the latest image, i.e., the penultimate image, so that the accuracy with which the position of the particular body region is detected can be increased.

The occupant detecting device may further comprise a deceleration detecting unit for detecting a deceleration of the vehicle, wherein if the detectability determining unit judges that the position detecting unit is incapable of detecting the position of the particular body region in the latest image, then the position detecting unit detects the position of the particular body region based on the past data, which are stored in the memory unit, and the deceleration detected by the deceleration detecting unit. Consequently, the accuracy with which the position of the particular body region is detected using past images can be increased.

The past data that are stored in the memory unit may comprise coordinate data representing the position of the particular body region detected by the position detecting unit or numerical data representing distance data between the position of the particular body region and a position of a particular region in the cabin of the vehicle, and the occupant state detecting unit may detect the state of the occupant based on the numerical data stored in the memory unit. Since the memory unit stores only numerical data representing the position of the particular region, rather than image data per se, the storage capacity of the memory unit, as well as the operational load, can be reduced.

According to the present invention, if it is impossible to detect the position of the occupant in a captured image, the position of the occupant is detected using a past image or past images. Therefore, the behavior of the occupant can reliably be detected without being affected by extraneous noise and ambient light, or by a loss of detection data due to a delay in turning on an auxiliary light.

### Brief Description of Drawings

FIG. 1 is a block diagram of an airbag system incorporating an occupant detecting device according to a first embodiment of the present invention;
FIG. 2 is a flowchart of an operation sequence of the airbag system and the occupant detecting device shown in FIG. 1;
FIG. 3 is a timing chart illustrating energization of an auxiliary light at a time that a vehicle enters a tunnel;
FIGS. 4A through 4D are diagrams illustrating a process of predicting the position of a head at a time that latest image data is lost;
FIG. 5 is a diagram illustrating a process of linearly predicting the position of a head at a time that latest image data is lost;
FIG. 6 is a diagram illustrating a process of predicting the position of a head at a time that latest image data is lost, while taking into account a G value detected by a fore-and-aft G sensor;
FIG. 7 is a diagram illustrating a process of linearly predicting the position of a head at a time that latest image data is lost, and a process of predicting the position of the head while taking into account a G value detected by a fore-and-aft G sensor; and
FIG. 8 is a block diagram of an airbag system incorporating an occupant detecting device according to a second embodiment of the present invention.

### Description of Embodiments

Embodiments of the present invention will be described below with reference to the drawings.

### [First Embodiment]

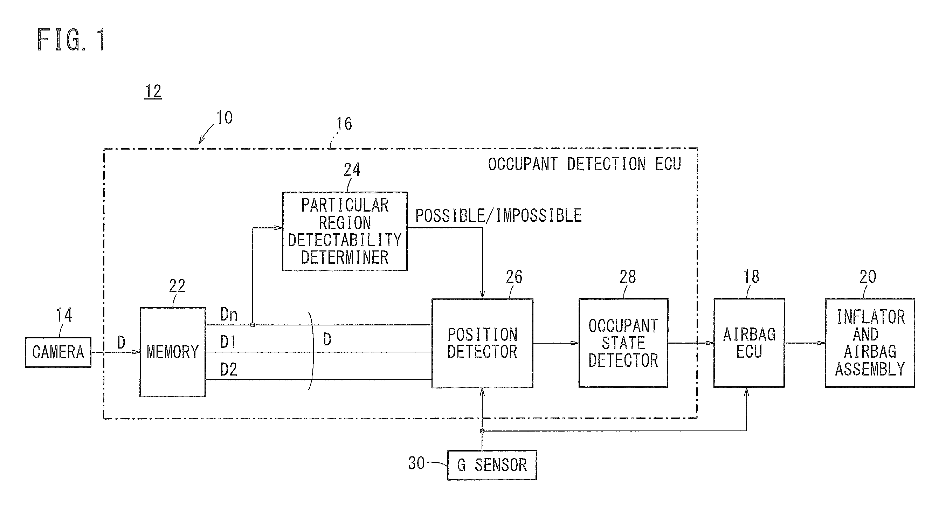

FIG. 1 is a block diagram of an airbag system 12 incorporating an occupant detecting device 10 according to a first embodiment of the present invention.

The occupant detecting device 10 basically includes a camera 14 such as a video camera or the like, and an occupant detection ECU (Electronic Control Unit) 16 (occupant detection control device).

The airbag system 12 comprises the occupant detecting device 10, an airbag ECU 18, inflator and airbag assemblies 20, and a G sensor 30 (fore-and-aft acceleration sensor).

The inflator and airbag assemblies 20 are mounted respectively on the steering wheel, which is positioned in front of the driver seated in the vehicle, and the instrument panel, which is positioned in front of the front passenger seat of the vehicle. If the vehicle has side curtain airbags, then additional inflator and airbag assemblies 20 also are mounted in both C pillars of the vehicle.

The camera 14 is disposed in the cabin of the vehicle, and is mounted on the roof of the vehicle in the vicinity of an upper central region of the front windshield of the vehicle. Alternatively, the camera 14 may be disposed on the instrument panel or the dashboard of the vehicle.

According to the present embodiment, the camera 14 has an image capturing area that covers an object to be imaged, which is the head (particular region) of the driver seated on the driver seat, and includes the face of the driver. The camera 14 is capable of capturing an image in a visible range or an infrared range, and successively outputs image data D representing the head of the driver.

The camera 14 preferably comprises two stereo cameras, which are capable of directly measuring the distance up to the head of the driver in order to detect the position of the head, i.e., the distance from the position of the mounted inflator and airbag assembly 20 to the head of the driver. However, even if the camera 14 is a monocular camera, the position of the head, i.e., the distance from the position of the mounted inflator and airbag assembly 20 to the head, can be detected on the basis of a fixed object in the cabin, e.g., a known position (fixed position, reference position) of a room mirror or the like, for example.

The camera 14 successively outputs image data D at given time intervals on the order of milliseconds, for example. The image data D are stored in a memory 22 of the occupant detection ECU 16. The time intervals at which the image data D are output from the camera 14 may be of any appropriate value, which is selected by a camera control ECU, not shown, depending on the application of the occupant detecting device 10.

The memory 22 stores latest image data Dn, penultimate image data D1, which are output before the latest image data Dn, and antepenultimate image data D2, which are output before the penultimate image data D1. When the occupant detection ECU 16 receives new image data A from the camera 14, the occupant detection ECU 16 deletes the antepenultimate image data D2 from the memory 22 without updating thereof, and the penultimate image data D1 prior to updating thereof becomes the antepenultimate image data D2. The occupant detection ECU 16 converts the latest image data Dn prior to updating thereof into the penultimate image data D1, and the new image data A received from the camera 14 becomes the latest image data Dn. The memory 22 may comprise a FIFO (First In First Out) memory.

The occupant detection ECU 16 and the airbag ECU 18 are in the form of a computer including a microcomputer, which includes a CPU (Central Processing Unit), memories such as a ROM (including an EEPROM) and a RAM (Random Access Memory), and other components including input/output devices such as an A/D converter and a D/A converter, and a timer that serves as a time measuring unit, etc. The computer functions as various function performers (function performing means) when the CPU reads and executes programs stored in the ROM. If necessary, the RAM includes a video RAM for temporarily storing image data D. The memory 22 also includes a video RAM.

The occupant detection ECU 16 includes, in addition to the memory 22, a particular region detectability determiner 24, a position detector 26, and an occupant state detector 28.

The position detector 26 and the airbag ECU 18 are supplied with a fore-and-aft acceleration G value from the G sensor 30, which serves as a fore-and-aft acceleration sensor.

The particular region detectability determiner 24 judges whether or not the latest image data Dn includes a head therein as a particular region according to a pattern matching process or the like. If the latest image data Dn includes a head, then the particular region detectability determiner 24 outputs a result "POSSIBLE (PARTICULAR REGION IS DETECTABLE)" to the position detector 26. If the latest image data Dn does not include a head, then the particular region detectability determiner 24 outputs a result "IMPOSSIBLE (PARTICULAR REGION IS UNDETECTABLE)" to the position detector 26.

If supplied with the result "POSSIBLE", the position detector 26 detects the position of a particular region of the body of the occupant who is seated on the seat, e.g., the position of the head, from the latest image data Dn stored in the memory 22. On the other hand, if supplied with the result "IMPOSSIBLE", the position detector 26 detects the position of the head of the occupant who is seated on the seat by predicting the position when the latest image data Dn are not acquired, based on the penultimate image data D1 and the antepenultimate image data D2, which are stored in the memory 22.

If supplied with the result "IMPOSSIBLE", the position detector 26 also can detect the position of the head of the occupant who is seated on the seat by predicting the position when the latest image data Dn are not acquired, based on the penultimate image data D1 and the antepenultimate image data D2, which are stored in the memory 22, and also on the fore-and-aft acceleration G value (actually the deceleration G value in the event that the vehicle is involved in a collision) from the G sensor 30.

The occupant state detector 28 detects the state of the occupant based on the position of the head, which is detected by the position detector 26. The state of the occupant represents whether or not the head of the occupant is within a given area, i.e., whether the occupant is present, whether the size of the head indicates an adult or a child, i.e., whether the occupant is an adult or a child, and whether or not the position of the head is spaced by a given distance from the position of the inflator and airbag assembly 20. The detected state of the occupant is supplied to the airbag ECU 18 in the form of a corresponding code from the occupant state detector 28. According to the background art, whether the occupant is an adult or a child is determined in accordance with a measured value from a weight sensor disposed below the seat. In contrast thereto, according to the present embodiment, however, the camera 14 is used to judge whether the occupant is an adult or a child. Therefore, it is possible to judge whether the occupant is an adult or a child more accurately and inexpensively than is possible with the background art.

The airbag ECU 18 decides whether or not the airbags of the inflator and airbag assemblies 20 should be inflated, i.e., inflated or kept folded, based on the content of the supplied code.

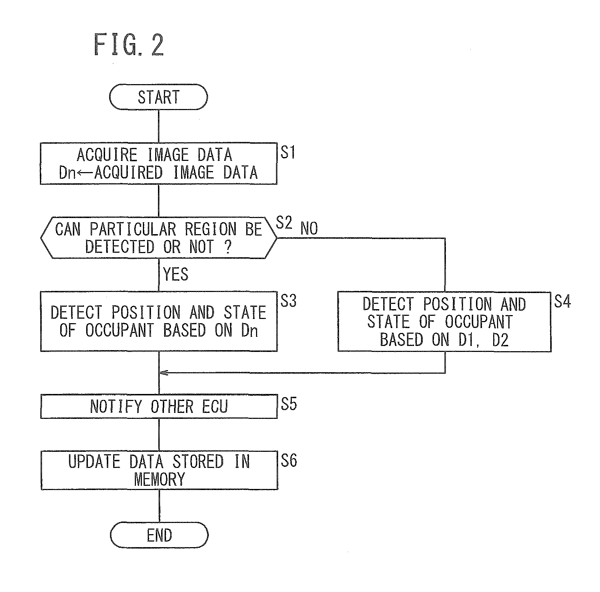

The airbag system 12, which incorporates the occupant detecting device 10, basically is constructed as described above. Operations of the airbag system 12 according to the first embodiment of the present invention will be described below with reference to the flowchart shown in FIG. 2.

In step S1, the occupant detection ECU 16 acquires image data D from the camera 14, and stores the acquired image data D as latest image data Dn in the memory 22.

In step S2, the particular region detectability determiner 24 judges whether or not the latest image data Dn stored in the memory 22 includes a head as a particular region, according to a pattern matching process or the like.

If the latest image data Dn includes a head as a particular region (step S2: YES), then the particular region detectability determiner 24 outputs information indicating that positional detection is "POSSIBLE" to the position detector 26. If the latest image data Dn does not include a head as a particular region (step S2: NO), then the particular region detectability determiner 24 outputs information indicating that positional detection is "IMPOSSIBLE" to the position detector 26.

According to an example in which the latest image data Dn does not include a head as a particular region and thus positional detection is "IMPOSSIBLE", the vehicle carrying the occupant detecting device 10 enters a tunnel, for example, at time ta. At time tb, upon elapse of a period td from time ta, an auxiliary light is automatically turned on. Therefore, image data D captured at time t-1 immediately after time tb includes an image of the head (step S2: YES). However, it can be seen that latest image data Dn, which are captured at time t0 immediately after the time ta at which the vehicle enters the tunnel, do not represent an image of a head due to underexposure (step S2: NO). It can also be understood that the penultimate image data D1 and the antepenultimate image data D2, which precede the latest image data Dn at time t0 prior to the time ta at which the vehicle enters the tunnel, both represent data in which the head can be detected. In step S1, the times t2, t1, t0, and t-1 (at equal time intervals) correspond to respective image acquisition timings.

If the particular region detectability determiner 24 judges that a head can be detected as a particular region from the latest image data Dn (step S2: YES), then in step S3, the position detector 26 calculates a distance Dis (occupant state) from the inflator and airbag assembly 20, for example, to the head based on the latest image data Dn, and based on the size of the head, the occupant state detector 28 detects whether the occupant state represents an adult or a child. The occupant state detected by the occupant state detector 28 is stored in the memory 22 in association with the latest image data Dn.

In step S5, the occupant state, which represents information concerning the distance Dis and identifying information concerning whether the occupant is an adult or a child, is supplied from the occupant state detector 28 to the airbag ECU 18. The airbag ECU 18 decides whether or not the airbag should be inflated, based on the supplied occupant state, which represents information concerning the distance Dis and identifying information concerning whether the occupant is an adult or a child, and based on the fore-and-aft acceleration G value from the G sensor 30.

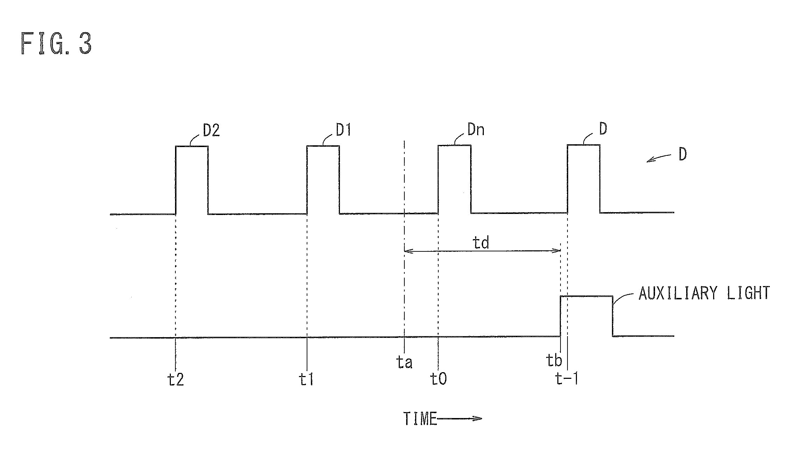

If the particular region detectability determiner 24 judges that a head cannot be detected as a particular region from the latest image data Dn, for example as at time t0 in FIG. 3 (step S2: NO), then in step S4 (around time t0), the position detector 26 predicts the present position of the head.

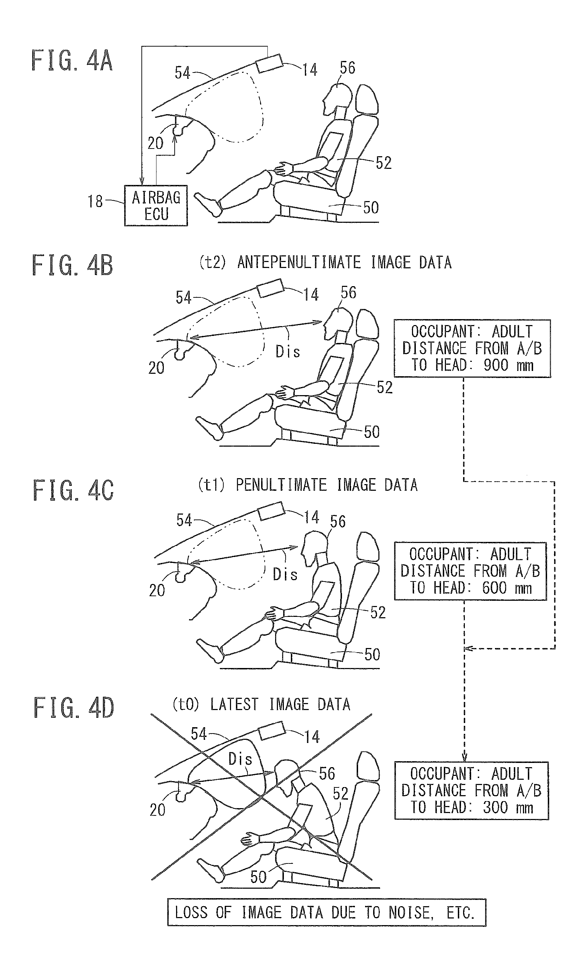

In order to predict the present position of the head, as shown in FIG. 4A, it is assumed that when an occupant 52 is seated on a seat (front seat) 50 in the vehicle (the occupant is shown as being seated on a front passenger seat for illustrative purposes), and that the camera 14 is disposed near an upper central region of a front windshield 54, the occupant 52 is detected as an adult from the antepenultimate image data D2. Further, as shown in FIG. 4B, the head 56 of the occupant 52 is spaced from the inflator and airbag assembly 20 (indicated as "A/B" in FIGS. 4B, 4C, 4D for illustrative purposes) by a distance Dis of 900 [mm] at time t2. In addition, as shown in FIG. 4C, the occupant 52 is detected as an adult from the penultimate image data D1, and the head of the occupant 52 is spaced from the inflator and airbag assembly 20 by a distance Dis of 600 [mm] at time t1.

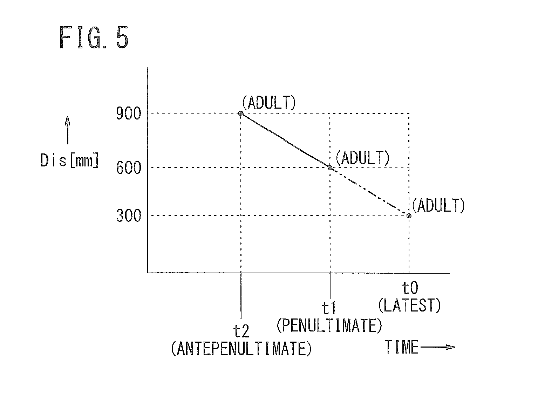

As shown in FIG. 5, latest image data Dn that are not acquired at time t0 can be predicted linearly from the antepenultimate image data D2 and the penultimate image data D1, based on the fact that the occupant 52 is an adult, the distance Dis is 900 [mm] at time t2, and the distance Dis is 600 [mm] at time t1. The head 56 is predicted as moving 300 [mm] in the direction (forward direction) indicated by the two-dot-and-dash line, and as being spaced from the inflator and airbag assembly 20 by a distance Dis of 300 [mm].

When the occupant state, which indicates that the occupant 52 is an adult and that the head 56 of the occupant 52 is spaced 300 [mm] from the inflator and airbag assembly 20 is delivered to the airbag ECU 18, the airbag ECU 18 executes a predetermined program to inflate the airbag or to keep the airbag in a folded state.

The program, which is executed by the airbag ECU 18 to inflate the airbag or to keep the airbag in a folded state, is dependent on the type of vehicle. In view of the fore-and-aft acceleration G value from the G sensor 30, the airbag should not be inflated if the occupant 52 is a child. Even if the occupant 52 is an adult and it is determined that the airbag should be inflated, when the distance Dis from the inflator and airbag assembly 20 to the head 56 is smaller than a certain threshold value, the inflator ejects a smaller amount of gas into the airbag than when the distance Dis from the inflator and airbag assembly 20 to the head 56 is greater than the certain threshold value. Furthermore, if an occupant 52 who is detected as an adult is leaning on a side windshield, the side curtain airbag is not inflated.

Regardless of whether the airbag ECU 18 should inflate the airbag or keep the airbag in a folded state, in step S6, the memory 22 stores the latest image data Dn (including information concerning the distance Dis and identifying information concerning whether the occupant is an adult or a child), which is captured directly by the camera 14, or the predicted image data D updated as latest image data Dn, stores the previous latest image data Dn, which is updated as penultimate image data D1, and further stores the prior penultimate image data D1, which is updated as antepenultimate image data D2.

If latest image data Dn are not captured (step S2: NO), then in addition to linearly predicting the latest image data Dn as shown in FIG. 5, an occupant state, i.e., the distance Dis from the inflator and airbag assembly 20 to the occupant, preferably is corrected using the fore-and-aft acceleration G value from the G sensor 30.

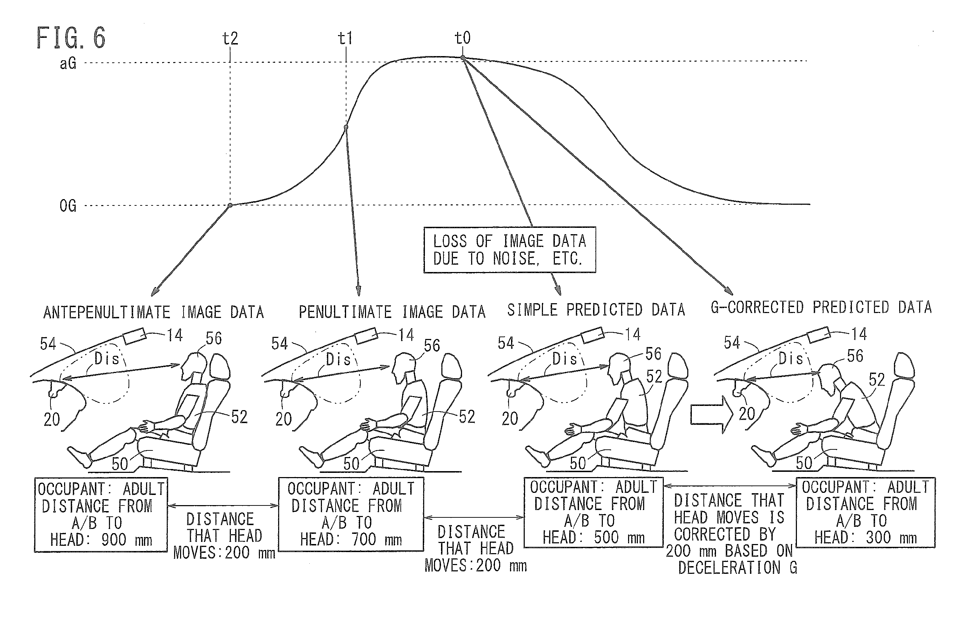

A process of correcting the distance Dis from the inflator and airbag assembly 20 using the fore-and-aft acceleration G value from the G sensor 30 will be described below with reference to FIG. 6.

It is assumed, in the event that a loss of latest image data Dn occurs at the latest time t0 due to noise or the like, then as shown in FIG. 6, the occupant 52 is detected as being an adult from the antepenultimate image data D2, and the head 56 of the occupant 52 is spaced from the inflator and airbag assembly 20 by a distance Dis of 900 [mm] at time t2. In addition, the occupant 52 is detected as being an adult from the penultimate image data D1, and the head of the occupant 52 is spaced from the inflator and airbag assembly 20 by a distance Dis of 700 [mm] at time t1. The respective occupant states are stored in the memory 22.

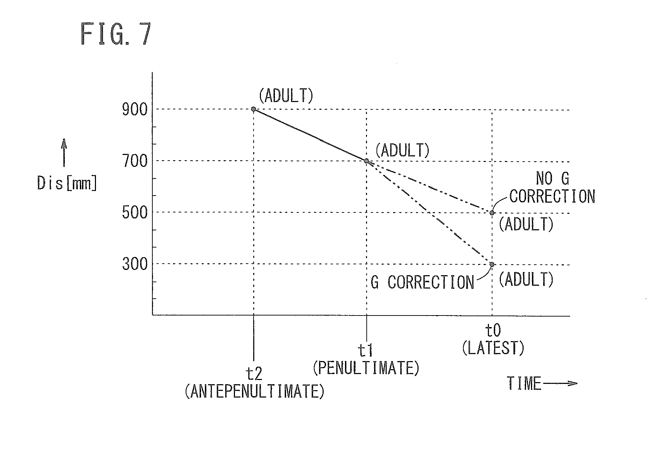

As shown in FIG. 7, if the fore-and-aft acceleration G value from the G sensor 30 is not taken into account (simple prediction), then latest image data Dn are predicted linearly based on the fact that the occupant is an adult and the head 56 of the occupant 52 is spaced from the inflator and airbag assembly 20 by a distance Dis of 500 [mm] ("NO G CORRECTION" in FIG. 7). However, if the deceleration G value is G = a x G (see FIG. 6) at time t0, then latest image data Dn, which takes into account the fore-and-aft acceleration G value, are predicted based on the fact that the occupant is an adult and the head 56 of the occupant 52 is spaced from the inflator and airbag assembly 20 by a distance Dis of 300 [mm], rather than 500 [mm]. Consequently, the distance that the head 56 is moved is corrected by a greater amount as a result of the deceleration G value.

According to the first embodiment, as described above, the occupant detecting device 10 essentially includes the camera 14, which serves as an image capturing unit and is disposed in the cabin of the vehicle for capturing images of a given area including the seat 50 in the cabin continuously or intermittently at predetermined time intervals, the camera 14 successively outputting the captured images, the position detector 26, which serves as a position detecting unit for detecting within the images the position of the head 56 as a particular body region of the occupant 52 who is seated on the seat 50, and the occupant state detector 28, which serves as an occupant state detecting unit for detecting the state of the occupant 52 based on the position of the head 56 detected by the position detector 26.

The occupant detecting device 10 also includes the memory 22, which serves as a memory unit for successively storing data depending on images that are successively output from the camera 14 during a predetermined period ranging from time t2 to time t0. The occupant detecting device 10 further includes the particular region detectability determiner 24, which functions as a particular region detectability determining unit for judging whether or not the position detector 26 is capable of detecting the position of the head 56. If the particular region detectability determiner 24 judges that the position detector 26 is capable of detecting the position of the head 56 in the latest image (latest image data Dn), as a presently output image from among the images that are successively output from the camera 14, then the position detector 26 detects the position of the head 56 (the distance Dis from the inflator and airbag assembly 20 in the first embodiment) based on the latest image (latest image data Dn). On the other hand, if the particular region detectability determiner 24 judges that the position detector 26 is incapable of detecting the position of the head 56 in the latest image (latest image data Dn), then the position detector 26 detects the position of the head 56 by predicting the position based on past data (the penultimate image data D1 and the antepenultimate image data D2 according to the first embodiment), which are stored in the memory 22 as data depending on images output from the camera 14 before the latest image (the latest image data Dn).

As described above, while the camera 14 is capturing images in periodic cycles, if the position of the head 56 cannot be detected from the latest image (latest image data Dn), then the position of the head 56 is detected from past images (the penultimate image data D1 and the antepenultimate image data D2). Consequently, the state of the occupant 52 can reliably be detected, thereby increasing system reliability without being affected by a loss of detection data caused by a delay in turning on the auxiliary light.

The past data, based on which the latest position (present position) of the head 56 is detected as a particular region, preferably is the penultimate image data D1 (first past data) and the antepenultimate image data D2 (second past data). Except upon detecting a collision, however, only the penultimate image data D1 may be used as the latest image data Dn, for thereby reducing the storage capacity of the memory 22 as images are captured intermittently. More specifically, even if it is impossible to detect the position of a particular region such as the head 56 or the like in the latest image, the position of a particular region such as the head 56 or the like can be detected using the image that is closest to the latest image, i.e., the penultimate image data D1 preceding the latest image data, so that the accuracy with which the position of the particular region is detected can be prevented from being lowered due to loss of data.

The occupant detecting device 10 further includes the G sensor 30, which serves as a deceleration detecting unit for detecting deceleration of the vehicle. As described above with reference to FIG. 7, if the particular region detectability determiner 24 judges that the position detector 26 cannot detect the position of the head 56 in the latest image (latest image data Dn), then the position detector 26 detects the position of the head 56 based on the past data (the penultimate image data D1 and the antepenultimate image data D2), which are stored in the memory 22, together with the deceleration value detected by the G sensor 30. Therefore, the accuracy with which the position of the head 56 is detected using past images can be increased.

The past data stored in the memory 22 comprise coordinate data of the position of the head detected by the position detector 26, e.g., xyz three-dimensional data, based on the fixed position of the room mirror or based on the distance Dis, as numerical data representing the distance data between the position of the head 56 and the inflator and airbag assembly 20 as a particular region in the vehicle cabin. The occupant state detector 28 detects the state of the occupant 52 based on the numerical data stored in the memory 22. Since the memory 22 stores only numerical data that represents the position of the particular region, rather than the image data per se output from the camera 14, the storage capacity of the memory 22 can be reduced, and the operational load imposed by the processing sequence can also be reduced.

### [Second Embodiment]

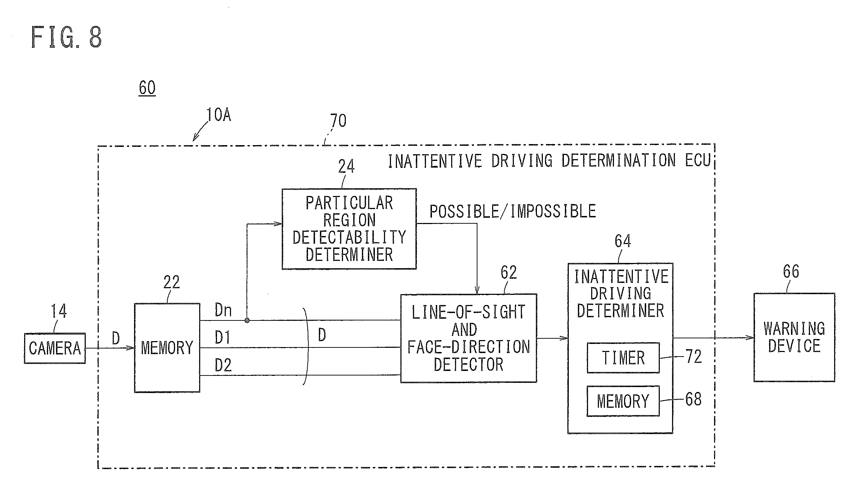

Fig. 8 is a block diagram of an inattentive driving warning apparatus 60 that incorporates an occupant detecting device 10A according to a second embodiment of the present invention.

The occupant detecting device 10A includes a camera 14 and an inattentive driving determination ECU 70. The inattentive driving warning apparatus 60 includes the occupant detecting device 10A and a warning device 66.

The camera 14, the memory 22, and the particular region detectability determiner 24 may be the same as those of the occupant detecting device 10 shown in FIG. 1.

The camera 14 successively outputs facial images as image data D at predetermined times. The memory 22 successively stores latest image data Dn, penultimate image data D1, and antepenultimate image data D2, and updates the stored image data at predetermined times. The image data stored in the memory 22 may be image data captured by the camera 14, or may be data detected by a line-of-sight and face-direction detector 62.

The particular region detectability determiner 24 judges whether the latest image data Dn includes a facial image according to a pattern matching process.

The line-of-sight and face-direction detector 62, which serves as a line-of-sight and face-direction detecting unit, carries out a recognition process such as a feature quantity calculating process and a shape determining process with respect to eyeballs of the driver of the vehicle as an object to be detected, on the facial image output from the camera 14, and detects the positions of the left and right eyes, e.g., the central positions of the irises, the central positions of Purkinje images as infrared reflected images on the surface of the corneas, or the central positions of the eyeballs. The line-of-sight and face-direction detector 62 then detects the line-of-sight direction of the driver by processing the detected positions, and calculates the angle (gazing angle) of the line-of-sight direction with respect to a frontal direction of the driver seated on the driver seat.

The line-of-sight and face-direction detector 62 also detects the central position of the face and the left and right end positions of the face based on the facial image output from the camera 14, and detects the direction of the driver's face according to a cylinder process, which calculates the direction of the face by approximating the face of a person rendered in a cylindrical shape, based on the detected positions.

The inattentive driving determination ECU 70 includes an inattentive driving determiner 64, which judges that the driver is inattentive, and outputs a judgment signal to the warning device 66 if the line-of-sight direction or the face direction detected by the line-of-sight and face-direction detector 62 resides continuously within a predetermined inattentive direction region stored in a memory 68 for a predetermined period of time (inattentive driving judgment time), which is set in a timer 72 (time measuring means).

When the warning device 66 receives the judgment signal, which is indicative of inattentive driving, the warning device 66 outputs a warning to the driver in the form of a sound (speech sound) from a non-illustrated speaker, vibrations from a non-illustrated vibrator that is incorporated in the steering wheel of the vehicle, or light emitted from a light source disposed at the position of the camera 14.

Owing to the inattentive driving warning apparatus 60 shown in FIG. 8, if the particular region detectability determiner 24 judges that it is impossible to detect a line-of-sight direction and a face direction based on latest image data Dn, then the line-of-sight and face-direction detector 62 detects the latest (present) line-of-sight direction and the face direction by predicting the line-of-sight direction and face direction based on past images, preferably penultimate image data D1 and antepenultimate image data D2. Accordingly, the inattentive driving determiner 64 can determine if the driver is inattentive, thereby increasing system reliability without being affected by extraneous noise and ambient light, or by a loss of detection data due to a delay in turning on the auxiliary light.

The present invention is not limited to the above embodiments, but may employ various arrangements based on the disclosure of the present description. For example, the present invention also may be applied to a drowsy driving detecting and warning technology for detecting when an occupant, i.e., the driver, of a vehicle becomes drowsy if the eyes of the driver are closed for a threshold period of time or longer, and issuing a warning.

## Claims

1. An occupant detecting device (10) comprising:
an image capturing unit (14) disposed in a cabin of a vehicle for capturing images of a given area including a seat in the cabin continuously or intermittently at predetermined time intervals and successively outputting the captured images;
a position detecting unit (26) for detecting a position of a particular body region (56) of an occupant (52) seated on the seat in the images output from the image capturing unit (14);
an occupant state detecting unit (28) for detecting a state of the occupant (52) based on the position of the particular body region (56), which is detected by the position detecting unit (26);
a memory unit (22) for successively storing data depending on the images that are successively output during a predetermined period from the image capturing unit (14); and
a detectability determining unit (24) for judging whether or not the position detecting unit (26) is capable of detecting the position of the particular body region (56),
wherein if the detectability determining unit (24) judges that the position detecting unit (26) is capable of detecting the position of the particular body region (56) in a latest image as a presently output image of the images successively output from the image capturing unit (14), the position detecting unit (26) detects the position of the particular body region (56) based on the latest image, and if the detectability determining unit (24) judges that the position detecting unit (26) is incapable of detecting the position of the particular body region (56) in the latest image, the position detecting unit (26) detects the position of the particular body region (56) based on past data that are stored in the memory unit (22) as data depending on images output from the image capturing unit (14) before the latest image.

2. The occupant detecting device according to claim 1, wherein the past data comprise first past data (D1) that serves as data depending on one of the images, which is output from the image capturing unit (14) in the predetermined time interval before the latest image, among the data stored in the memory unit (22).

3. The occupant detecting device according to claim 2, wherein the past data comprise the first past data (D1), and second past data (D2) that serves as data depending on one of the images, which is output from the image capturing unit (14) in the predetermined time interval before the first past data (D2); and
the position detecting unit (26) detects the position of the particular body region (56) based on a change in position between the particular body region (56) detected in the first past data (D1) and the particular body region (56) detected in the second past data (D2).

4. The occupant detecting device according to any one of claims 1 through 3, further comprising:
a deceleration detecting unit (30) for detecting a deceleration of the vehicle,
wherein if the detectability determining unit (24) judges that the position detecting unit (26) is incapable of detecting the position of the particular body region (56) in the latest image, then the position detecting unit (26) detects the position of the particular body region (56) based on the past data, which are stored in the memory unit (22), and the deceleration detected by the deceleration detecting unit (30).

5. The occupant detecting device according to any one of claims 1 through 4, wherein the past data that are stored in the memory unit (22) comprise coordinate data representing the position of the particular body region (56) detected by the position detecting unit (26) or numerical data representing distance data between the position of the particular body region (56) and a position of a particular region in the cabin of the vehicle; and
the occupant state detecting unit (28) detects the state of the occupant (52) based on the numerical data stored in the memory unit (22).
